# EUROPEAN PATENT SPECIFICATION

(11) **EP 1 610 007 B1**
(45) Date of publication and mention of the grant of the patent: **09.06.2010**
(21) Application number: 05253895.6
(22) Date of filing: 23.06.2005
(51) Int. Cl.: F16B 41/00, E21B 34/00

(54) **Tightening system for secure connection of at least two element with one another**
Festziehensystems für einen sicheren Anschluß von mindestens zwei Elementen
Système de serrage pour une connexion fiable pour au moins deux éléments

(30) Priority: 24.06.2004 US 875633
(43) Date of publication of application: 28.12.2005
(73) Proprietor: Unex Corporation, Mahwah, New Jersey 07430 (US)
(72) Inventor: Koppenhoefer, Peter, Portland, PA 18351 (US)
(74) Representative: Hanson, William Bennett

(56) References cited:
- US-A- 4 480 513
- US-A- 4 602 903
- US-A- 5 071 300
- US-A- 5 622 465

## Description

The present invention relates to a device for secure tightening of two elements with one another.

In the oil and gas field the theft of wellheads and other valves presents a problem. It is therefore advisable to find means for preventing easy removal of the flange bolts with hammer wrenches, pipe wrenches, etc. Two examples are to be found in the documents US 5,071,300 and US 4,480,513 which is considered the closest prior art.

Accordingly, it is an object of the present invention to provide a tightening system for secure connection of at least two elements with one another, which avoids the disadvantages of the prior art.

More particularly, it is an object of the present invention to provide a tightening system for secure connection of at least two elements with one another which prevents easy removal of the flange bolts with hammer wrenches, pipe wrenches, etc.

In keeping with these objects and with others which will become apparent hereinafter, the present invention resides in a tightening system according to claim 1. Preferred or optional features of the invention are set out in the dependent claims.

When the device is designed in accordance with the present invention, it prevents easy removal of the flange bolt.

The holding means includes a holding member arranged on the other end of the connecting member and formed to prevent the use of a pipe wrench, and the tightening member has a part formed to be freely rotatable on the one end of the connecting member also to prevent the application of a pipe wrench.

In one embodiment of the present invention the rotatable spacing member is formed as a hardened spacer.

The holding member may be formed as a tapered nut which is not suitable for loosening with a pipe wrench.

In accordance with a further optional feature of the present invention, a lock washer is arranged between the tapered nut and a respective one of the elements.

The tightening member can include a nut threaded on said outwardly-extending end of said connecting member, and a sleeve surrounding the nut and turnable relative to said nut.

The invention will be best understood from the following description of specific embodiments, given by way of example only, when read in connection with the accompanying drawings, in which:

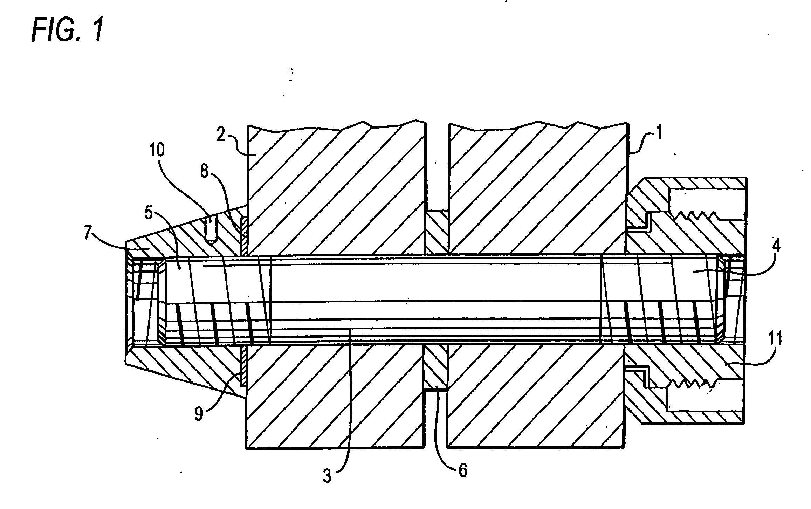

Figure 1 is a view schematically showing a device for secure tightening of two elements, for example flanges, with one another, in accordance with the present invention;

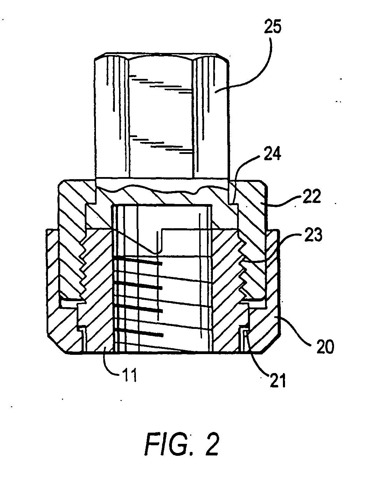

Figure 2 is a view showing an installation of a security nut of the device in accordance with the present invention; and

Figure 3 is a perspective view of the security nut of the device in accordance with the present invention.

A device in accordance with the present invention is used for secure tightening of two elements, such as for example two flanges 1 and 2. The device includes a connecting member or a stud which is identified with reference numeral 3. The connecting member 3 has a first threaded end 4 extending outwardly beyond the flange 1 and a second threaded end 5 extending outwardly beyond the flange 2.

In accordance with the present invention, a member 6 is arranged between the flanges 1 and 2. The member 6 can be formed as a hardened steel spacer which is fitted between the flanges 1 and 2 and is rotatable on the connecting member 3. Therefore, cutting off of the connecting member 3 with a reciprocating saw or hacksaw is prevented. The member 6 can thereby prevent the destruction of the device and removal of the connecting member 3 by cutting in the space between the flanges 1 and 2.

A back nut 7 is screwed on the threaded end 5 of the connecting member 3. It is tapered to prevent the use of a pipe wrench for loosening. The back nut 7 has a recess or a space 8 in which a lock washer 9 is provided. The lock washer 9 can be formed as a conventional lock washer having teeth which slightly engage into the left side of the flange 2 upon tightening. The back nut 7 also has a small hole 10 for a tommy bar/pin, to stabilize the back nut 7 during the assembly process.

For tightening the device a security nut 11 is utilized. The nut 11 has an outer thread 12, an inner thread 13, and axially extending teeth 14 which are circumferentially spaced from one another and form a crown. Each of the teeth 14 can have a front flank 15 which extends substantially in an axial direction, and a back flank 16 which is inclined in a circumferential direction of each tooth.

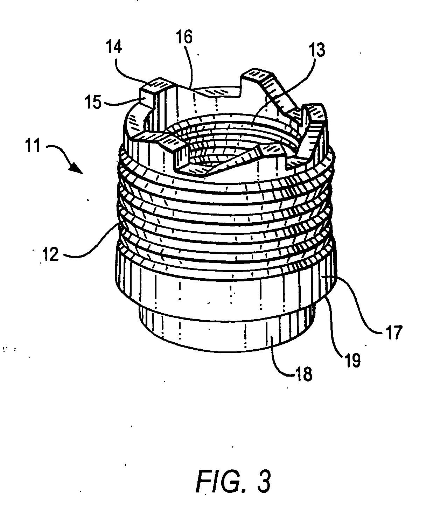

A lower end of the nut 11 shown in Figure 3 has a shoulder 19 formed between a larger diameter portion 17 and a smaller diameter portion 18.

A sleeve 20 is arranged on the nut 11 and has a shoulder 21 cooperating with the shoulder 19 of the nut. The sleeve 20 can be formed as an armoured sleeve and is arranged freely rotatably on the nut 11 after tightening of the nut. Since the sleeve is free to rotate after the nut has been tightened, it prevents the application of a pipe wrench to the nut.

While the inner thread 13 of the nut 11 cooperates with the outer thread of the end 4 of the connecting member 3, the outer thread 12 of the nut 11 cooperates with an inner thread 23 of the retaining sleeve 22. The retaining sleeve 22 has a shoulder identified with reference numeral 24.

The device further has a nut drive which is identified with reference numeral 25. The nut drive which is formed as a crown drive bit engages the crown of the nut 11 and is kept connected to the nut by the sleeve 22.

For tightening of the nut the retaining sleeve 12, with the portion of the nut driver 25 inside, is screwed onto the nut 11 until the crown of the nut drive 25 engages with the crown of the nut 11. When the nut drive 25 is turned, the rotational force is applied against the front, square flank 15 of the teeth and the nut 11 is tightened. Then the retaining sleeve 12 is unscrewed from the nut 11 and removed together with the nut drive 25. For loosening of the nut, the retaining sleeve 12, with the portion of the nut drive 25 inside, is screwed onto the nut 11 until the crown of the nut drive 25 engages with the crown of the nut 11 and the nut drive 25 is turned in an opposite direction. The rotational force applied against the back angled flank 16 of the teeth, and the nut 11 is unscrewed.

The crown shape of the nut prevents the use of a chisel to loosen the nut. The chisel would glance off the angle of the back flank of the teeth preventing the nut from being loosened.

A common torque tool, manual, air or hydraulically operated, can be applied to the device for tightening or loosening, abutting against the flange or adjacent nut for reaction.

It will be understood that each of the elements described above, or two or more together, may also find a useful application in other types of constructions differing from the types described above.

While the invention has been illustrated and described as embodied in a tightening system for secure connection of at least two elements with one another, it is not intended to be limited to the details shown, since modifications and structural changes may be made without departing in any way from the scope of the appended claims.

## Claims

1. A tightening system for secure connection of at least two elements (1, 2) with one another, comprising a connecting member (3) arranged to extend in aligned openings provided in the elements (1, 2) and having two opposite ends (4, 5) each adapted to extend outwardly beyond a respective one of the elements (1, 2), a spacer member (6) arranged, in use, rotatably between the elements said spacer member (6) being freely rotatable on said connecting member (3) to prevent cutting of said connecting member a holding member (7) arranged at one end (5) of said connecting member, and a tightening member (11, 20) arranged on the other end (4) of said connecting member, the holding member (7) at said one end (5) of said connecting member having a shape such as to prevent use of a pipe wrench for loosening, and **characterized by** the tightening member having an outer part (20) which is freely rotatable relative to the connecting member (3) to prevent use of a pipe wrench for loosening at the other end, so as to prevent tampering with the connecting member (3) at the other end (5) by the immovable holding member (7) and at the other end (4) of the connecting member (3) by the tightening member (11, 20).

2. A tightening system as defined in claim 1, wherein said rotatable spacer member (6) is formed as a hardened spacer.

3. A tightening system as defined in claim 1 or 2, wherein said holding member (7) is formed as a tapered nut which is not suitable for loosening with a pipe wrench.

4. A tightening system as defined in claim 3, further comprising a lock washer (9) for arranging between said tapered nut (7) and the adjacent element (2).

5. A tightening system as defined in any preceding claim, wherein said tightening member includes a nut (11) threaded on said other end (4) of said connecting member (3,), said outer part (20) being formed as a sleeve surrounding said nut and turnable relative to said nut (11) and said connecting member.

6. A tightening system as defined in claim 5, wherein said nut (11) is formed as a crown nut requiring a special tool.

7. A tightening system as defined in claim 6, wherein said nut (11) has a plurality of teeth (14) each having a front flank (15) extending substantially axially and a rear flank (16) inclined in a peripheral direction.

## Patentansprüche

1. Festziehsystem für die sichere Verbindung von wenigstens zwei Elementen (1, 2) miteinander, umfassend ein Verbindungselement (3), welches so angeordnet ist, dass es sich durch in den Elementen (1, 2) vorgesehene, ausgerichtete Öffnungen erstreckt und welches zwei gegenüberliegende Enden (4, 5) aufweist, welche jeweils so angepasst sind, dass sie sich über jeweils eines der Elemente (1, 2) hinaus nach außen erstrecken, ein Abstandshalterelement (6), welches im Gebrauch drehbar zwischen den Elementen angeordnet ist, wobei das Abstandshalterelement (6) auf dem Verbindungselement (3) frei drehbar ist, um ein Durchschneiden des Verbindungselements zu verhindern, ein Halteelement (7), welches an einem Ende (5) des Verbindungselements angeordnet ist und ein Festziehelement (11, 20), welches an dem anderen Ende (4) des Verbindungselements angeordnet ist, wobei das Halteelement (7) an dem einen Ende (5) des Verbindungselements eine solche Form hat, dass das Benutzen einer Rohrzange zum Lösen verhindert wird, **dadurch gekennzeichnet, dass** das Festziehelement einen äußeren Teil (20) aufweist, welcher relativ zu dem Verbindungselement (3) frei drehbar ist, um das Benutzen einer Rohrzange zum Lösen an dem anderen Ende zu verhindern, um so unerlaubte Manipulation zu verhindern mit dem Verbindungselement (3) an dem anderen Ende (5) durch das unbewegliche Halteelement (7) und an dem anderen Ende (4) des Verbindungselements (3) durch das Festziehelement (11, 20).

2. Festziehsystem nach Anspruch 1, wobei das drehbare Abstandshalterelement (6) als ein gehärteter Abstandshalter ausgebildet ist.

3. Festziehsystem nach Anspruch 1 oder 2, wobei das Halteelement (7) als eine angeschrägte Mutter ausgebildet ist, welche nicht geeignet ist, um mit einer Rohrzange gelöst zu werden.

4. Festziehsystem nach Anspruch 3, welches darüber hinaus eine Sicherungsscheibe (9) zur Anordnung zwischen der angeschrägten Mutter (7) und dem angrenzenden Element (2) umfasst.

5. Festziehsystem nach einem der vorangehenden Ansprüche, wobei das Festziehelement eine Mutter (11) umfasst, welche auf das andere Ende (4) des Verbindungselements (3) aufgeschraubt ist, wobei der äußere Teil (20) als eine Hülse ausgebildet ist, die die Mutter umgibt und relativ zu der Mutter (11) und zu dem Verbindungselement drehbar ist.

6. Festziehsystem nach Anspruch 5, wobei die Mutter (11) als Kronenmutter (11) ausgebildet ist, welche ein spezielles Werkzeug erfordert.

7. Festziehsystem nach Anspruch 6, wobei die Mutter (11) eine Vielzahl von Zähnen (14) aufweist, welche jeweils eine vordere Flanke (15) haben, die sich im Wesentlichen axial erstreckt, und eine hintere Flanke (16), welche in einer Umfangsrichtung geneigt ist.

## Revendications

1. Système de serrage pour une connexion fiable pour au moins deux éléments (1, 2) les uns aux autres, comprenant un organe de liaison (3) agencé pour s'étendre en des ouvertures alignées prévues dans les éléments (1, 2) et ayant deux extrémités (4, 5) opposées, chacune adaptée pour s'étendre extérieurement au delà d'un élément respectif parmi les éléments (1, 2), un organe d'espacement (6) agencé, en utilisation, pour pouvoir tourner entre les éléments, ledit organe d'espacement (6) étant susceptible de tourner librement sur ledit organe de liaison (3) de manière à empêcher le découpage dudit organe de liaison, un organe de maintien (7), agencé à une extrémité (5) dudit organe de liaison, et un organe de serrage (11, 20) agencé sur l'autre extrémité (4) dudit organe de liaison, l'organe de maintien (7) situé à ladite première extrémité (5) dudit organe de liaison ayant une forme permettant d'empêcher l'utilisation d'une clé serre-tubes pour le desserrage, et **caractérisé en ce que** l'organe de serrage comprend une partie extérieure (20), susceptible de tourner librement par rapport à l'organe de liaison (3), de manière à empêcher l'utilisation d'une clé serre-tubes pour le desserrage à l'autre extrémité, de manière à empêcher les manipulations frauduleuses avec l'organe de liaison (3) à l'autre extrémité (5), par l'organe de maintien (7) indéplaçable, et à l'autre extrémité (4) de l'organe de liaison (3), par l'organe de serrage (11, 20).

2. Système de serrage selon la revendication 1, dans lequel ledit organe d'espacement (6) susceptible de tourner est formé en tant qu'un organe d'espacement durci.

3. Système de serrage selon la revendication 1 ou 2, dans lequel ledit organe de maintien (7) est réalisé sous la forme d'un écrou conique, ne convenant pas pour un desserrage avec une clé serre-tubes.

4. Système de serrage selon la revendication 3, comprenant en outre une rondelle d'arrêt (9) pour agencement entre ledit écrou (7) conique et l'élément (2) adjacent.

5. Système de serrage selon l'une quelconque des revendications précédentes, dans lequel ledit organe de serrage comprend un écrou (11) vissé sur ladite autre extrémité (4) dudit organe de liaison (3), ladite partie extérieure (20) étant formée en tant que douille, entourant ledit écrou et susceptible de tourner par rapport audit écrou (11) et audit organe de liaison.

6. Système de serrage selon la revendication 5, dans lequel ledit écrou (11) est réalisé sous forme d'écrou à créneau, demandant un outil spécial.

7. Système de serrage selon la revendication 6, dans lequel ledit écrou (11) comprend une pluralité de dents (14) ayant chacune un flanc avant (15) s'étendant sensiblement axialement et un flanc arrière (16) incliné dans une direction périphérique.
